# EUROPÄISCHE PATENTSCHRIFT

(11) **EP 3 137 254 B1**
(45) Veröffentlichungstag und Bekanntmachung des Hinweises auf die Patenterteilung: **30.01.2019**
(21) Anmeldenummer: 15722964.2
(22) Anmeldetag: 30.04.2015
(51) Int. Cl.: B23P 15/34, B23P 15/46, B23C 5/18

(54) **WERKZEUG**
TOOL
OUTIL

(30) Priorität: 30.04.2014 DE 102014208125
(43) Veröffentlichungstag der Anmeldung: 08.03.2017
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Kordel, Mattias
(86) Internationale Anmeldenummer: PCT/EP2015/059550
(87) Internationale Veröffentlichungsnummer: WO 2015/166066

(56) Entgegenhaltungen:
- DE-A1-102008 052 743
- DE-U1-202014 002 031
- JP-A- 2003 205 414
- US-A1- 2010 086 373
- US-A1- 2013 272 806

## Beschreibung

Die Erfindung betrifft ein Werkzeug zur spanenden Bearbeitung von Werkstücken gemäß Oberbegriff des Anspruchs 1 sowie ein Verfahren gemäß Oberbegriff des Anspruchs 9. Ein derartiges Werkzeug sowie ein derartiges Verfahren gehen beispielsweise aus der JP 2003-205414 A hervor.

Werkzeuge der hier angesprochenen Art sind bekannt. Sie weisen einen eine Mittelachse umfassenden Grundkörper auf, der eine Außenfläche mit einer zumindest auf Bereiche der Außenfläche aufgebrachten Hartstoffschicht umfasst, in die mindestens eine geometrisch definierte Schneide eingearbeitet ist. Es hat sich herausgestellt, dass das Verfahren zur Herstellung der hier angesprochenen Werkzeuge häufig aufwändig ist, weil Bereiche der Außenfläche des Grundkörpers mit der genannten Hartstoffschicht versehen sind. Es ist in solchen Fällen schwer möglich, das Werkzeug zwischen Zentrierspitzen einzuspannen und mittels eines Schleifvorgangs herzustellen.

Aufgabe der Erfindung ist es daher, ein Werkzeug zu schaffen, welches diesen Nachteil vermeidet.

Zur Lösung dieser Aufgabe wird ein Werkzeug vorgeschlagen, welches die Merkmale des Anspruchs 1 aufweist. Es zeichnet sich dadurch aus, dass die mindestens eine geometrisch definierte Schneide durch Herstellen eines Spanraums unter Abtrag von Material der Hartstoffschicht hergestellt ist. Es ist daher relativ leicht möglich, das Werkzeug zur Bearbeitung exakt einzuspannen und mit hohen Genauigkeit herzustellen.

Bevorzugt wird ein Ausführungsbeispiel des Werkzeugs, welches gekennzeichnet ist durch eine an einer Frontseite des Werkzeugs vorgesehenen Zentrierausnehmung sowie durch eine an einer der Frontseite gegenüberliegenden Rückseite des Werkzeugs vorgesehenen weiteren Zentrierausnehmung. Das Werkzeug kann zur Bearbeitung zwischen Zentrierspitzen eingespannt und beispielsweise zur Herstellung der mindestens einen geometrischen Schneide einem Schleifvorgang unterworfen werden.

Weitere Ausgestaltungen und Vorteile des Werkzeugs ergeben sich aus den zugehörigen Unteransprüchen.

Aufgabe der Erfindung ist es außerdem, ein Verfahren zu schaffen, welches den oben genannten Nachteil vermeidet.

Zur Lösung dieser Aufgabe wird ein Verfahren vorgeschlagen, welches die in Anspruch 1 genannten Merkmale aufweist. Bei diesem Verfahren wird eine Hartstoffschicht zumindest auf Bereiche einer Außenfläche eines Grundkörpers des herzustellenden Werkzeugs derart aufgetragen, dass ein zentraler Frontbereich um die Mittelachse des Grundkörpers frei von der Hartstoffschicht ist. Mindestens eine geometrisch definierte Schneide wird in einen mit der Hartstoffschicht versehenen Bereich der Außenfläche durch Abtrag von Material der Hartstoffschicht erzeugt. Dabei kann das Material durch Schleifen, mittels eines Lasers oder durch Erosionsverfahren abgetragen werden. Auf diese Weise wird eine Schneide geschaffen, die entlang der Schnittlinie zwischen der unversehrten Außenfläche und einer Fläche des Materialabtrags verläuft.

Bei einem bevorzugten Verfahren ist vorgesehen, dass bei der Herstellung der Schneide auch Material des Grundkörpers des Werkzeugs abgetragen wird. Auf diese Weise wird eine Spanfläche gebildet, die zum Teil im Bereich der Hartstoffschicht und zum Teil im Bereich des Materials des Grundkörpers des Werkzeugs verläuft. Gerade dort, wo die Spanfläche besonders belastet wird, ist das Material der Hartstoffschicht vorgesehen, sodass eine hohe Verschleißfestigkeit gegeben ist.

Weitere Ausführungen und Vorteile des Verfahrens ergeben sich aus den zugehörigen Unteransprüchen.

Die Erfindung wird im Folgenden anhand der Zeichnung näher erläutert. Dabei zeigen:
- Figur 1: eine Seitenansicht eines Ausführungsbeispiels eines Werkzeugs;
- Figur 2: eine perspektivische Vorderansicht des Werkzeugs nach Anspruch 1 und
- Figur 3: einen Rohling eines kuppelförmigen Abschnitts des Grundkörpers des in den Figuren 1 und 2 dargestellten Werkzeugs.

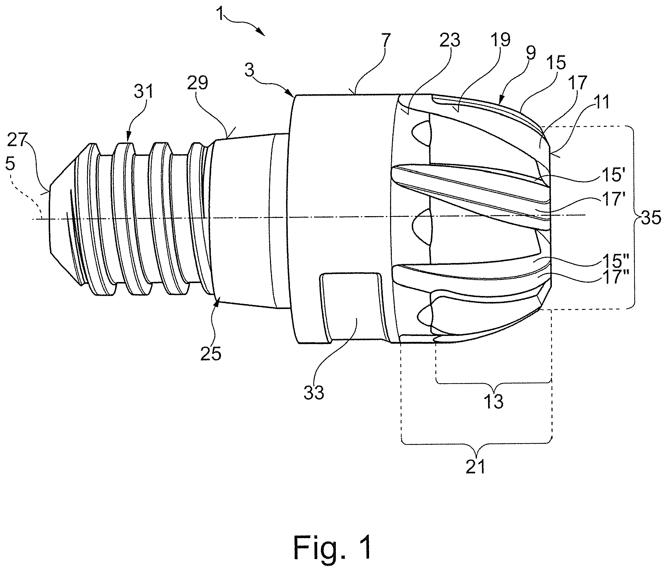

Figur 1 zeigt ein Ausführungsbeispiel eines Werkzeugs 1 zur spanenden Bearbeitung von Werkstücken. Es weist einen Grundkörper 3 mit einer Mittelachse 5 sowie einer Außenfläche 7 auf. Das Werkzeug 1 ist zumindest auf Bereichen der Außenfläche 7 mit einer Hartstoffschicht 9 versehen. Hier ist der vordere, sich an die Stirnseite 11 anschließende Bereich 13 mit der Hartstoffschicht 9 versehen, die vorzugsweise auf den Grundkörper 3 aufgepresst ist. Die Hartstoffschicht weist vorzugsweise CBN (Kristallines Bohrnitrit), PKD (Polykristallinen Diamant) oder PCBN (Polykristallines Kubisches Bohrnitrit) auf oder besteht aus diesen Materialien.

In dem mit der Hartstoffschicht 9 versehenen vorderen Bereich ist mindestens eine geometrisch definierte Schneide 15 vorgesehen. Bei dem hier dargestellten Ausführungsbeispiel sind acht in gleichem Umfangsabstand zueinander angeordnete Schneiden 15, 15', 15" usw. vorgesehen, die vorzugsweise alle identisch ausgebildet sind. Den Schneiden 15 sind jeweils Spanräume zugeordnet, nämlich der Schneide 15 der Spanraum 17, der Schneide 15' der Spanraum 17', der Schneide 15" der Spanraum 17" usw. Über die Spanräume 17 werden von den Schneiden 15 abgetragene Späne abgeführt.

Die Spanräume 17 können durch Schleifen erzeugt werden, oder mittels eines Lasers oder mithilfe eines Erosionsverfahrens. Die Art der Herstellung der Spanräume 17 ist nicht entscheidend. Bei der Herstellung der Spanräume 17 wird die Hartstoffschicht 9, außerdem vorzugsweise Material des Grundkörpers 3 abgetragen. Im Bereich der Außenfläche 7 bleibt die Hartstoffschicht 9 bestehen, was im Bereich der Schneide 15' und 15" in Figur 1 gut zu sehen ist. Die den Schneiden 15 zugeordnete seitliche Begrenzungsfläche 19 des zugehörigen Spanraums 17, die oben in Figur 1 zu sehen ist, wird auf jeden Fall gebildet von der Hartstoffschicht 9 und gegebenenfalls dem Material des Grundkörpers 3. Es zeigt sich hier, dass die Schneide 15 durch die Schnittlinie der Außenfläche 7 mit der seitlichen Begrenzungsfläche 19 gebildet wird und dass sich an die Schneide 15 eine Spanfläche ausschließt, auf welcher die von der Schneide 15 abgetragenen Späne ablaufen. Diese gelangen dann einen Bereich der weiter unten liegenden seitlichen Begrenzungsfläche 19. Auf diese Weise ist gewährleistet, dass die bei der Bearbeitung eines Werkzeugs hoch belastete Schneide 15 und auch die sich unmittelbar an die Schneide 15 anschließende Spanfläche im Bereich der Hartstoffschicht ausgebildet werden, sodass das Werkzeug 1 besonders verschleißfest ist.

Das in Figur 1 dargestellte Werkzeug 1 ist als Kugelbahnfräser ausgebildet. Es weist einen sich an die Stirnseite 11 anschließenden kuppelförmigen Abschnitt 21 auf, der mit der Hartstoffschicht 9 versehen ist. Der kuppelförmige Abschnitt 21 selbst weist Hartmetall auf und besteht vorzugsweise aus diesem Material. Er ist vorzugsweise als separates Element ausgebildet, welches bei dem fertigen Werkzeug 1 einen Teil des Grundkörpers 3 bildet und mit diesem verlötet, verschweißt oder auf andere geeignete Weise, beispielsweise durch Verkleben, verbunden ist. In Figur 1 ist eine Grenzlinie 23 zu sehen, die den Verbindungsbereich zwischen dem kuppelförmigen Abschnitt 21 und dem auch als Basisteil bezeichneten übrigen Grundkörper 3 erkennen lässt.

Wenn auch bei dem in Figur 1 dargestellten Ausführungsbeispiel des Werkzeugs der kuppelförmige Abschnitt 21 als separates Teil ausgebildet ist, welches auf den übrigen Grundkörper 3 aufgebracht wird, so sei darauf hingewiesen, dass der Grundkörper 3 auch einstückig ausgebildet sein kann, also den kuppelförmigen Abschnitt 21 mit der Hartstoffschicht 9 einschließt.

Das Werkzeug 1 wird auf geeignete Weise an einem Werkzeugträger befestigt. Beispielhaft ist hier - bei der Ansicht gemäß Figur 1 - links ein Schaft 25 zu erkennen, der dazu dient, das Werkzeug 1 an einem Werkzeughalter zu befestigen.

Der Schaft 25 ist hier beispielhaft leicht konisch ausgebildet. Er verjüngt sich also in Richtung seiner der Stirnseite 11 abgewandten Endfläche 27. In die Umfangsfläche 29 des Schafts 25 ist hier ein Außengewinde 31 eingebracht, das dazu dient, in ein Innengewinde einer Werkzeugaufnahme eingeschraubt zu werden.

Der Schaft 25 kann auf beliebige bekannte Weise ausgebildet werden, um eine Befestigung des Werkzeugs 1 an einem Werkzeughalter zu gewährleisten. Stattdessen kann auch ein Flansch zur Befestigung des Werkzeugs 1 beispielsweise an einer Werkzeugmaschine vorgesehen werden.

In die Umfangsfläche 7 des Grundkörpers 3 ist in einem an den kuppelförmigen Abschnitt 21 angrenzenden Bereich mindestens eine Planfläche 33 eingebracht, die dazu dient, das Werkzeug 1 drehfest halten zu können, um es an einem Werkzeughalter zu befestigen.

Das Werkzeug 1 ist hier als Werkzeugkopf ausgebildet, der bei Verschleiß der mindestens einen Schneide 15 einfach ausgetauscht werden kann. Es ist also nicht erforderlich, auch den Werkzeughalter bei Verschleiß der mindestens einen Schneide 15 auszutauschen.

Figur 1 ist noch zu entnehmen, dass das Werkzeug 1 im Bereich seiner Stirnseite 11 einen zentralen Frontbereich 35 aufweist, der sich um die Mittelachse 5 erstreckt und keine Hartstoffschicht aufweist. Der Frontbereich 35 kann dadurch realisiert werden, dass beim Aufbringen der Hartstoffschicht in dem Bereich 13 der Frontbereich 35 von Anfang an frei bleibt, also keine Hartstoffschicht 9 aufweist. Es ist aber auch möglich, einen kuppelförmigen Abschnitt 21 zu realisieren, der in seinem vorderen, um die Mittelachse 5 gelegenen Bereich auch kuppelförmig ausgebildet und mit mit einer Hartstoffschicht versehen ist. Ein derartig durchgehend gewölbter kuppelförmiger Abschnitt wird zur Erzeugung der Stirnseite abgeschliffen, um eine ebene Fläche zu bilden, auf der die Mittelachse 5 senkrecht steht. Der vorderste Bereich des kuppelförmigen Abschnitts 21 wird auf diese Weise abgetragen, gleichzeitig auch die dort vorhandene Hartmetallschicht 9. Auf diese Weise ergibt sich dann ein kuppelförmiger Abschnitt 21, wie er in Figur 1 dargestellt ist: Er weist einen Frontbereich 35 auf, in dem keine Hartstoffschicht 9 vorhanden ist.

In den Frontbereich 25 ist im Bereich der Mittelachse 5 eine hier nicht dargestellte Zentrierausnehmung eingebracht, vorzugsweise auch in der Endfläche 27, auch hier im Bereich der Mittelachse 5. Durch diese Ausgestaltung ist es auf einfache Weise möglich, das Werkzeug 1 zwischen Zentrierspitzen einzuspannen, welche in die im Frontbereich 15 beziehungsweise in der Endfläche 27 vorgesehenen Ausnehmungen eingreifen. Auf diese Weise ist es sehr leicht möglich, die Außenfläche 7 des Werkzeugs 1 zu bearbeiten, insbesondere die Spanräume 17 vorzugsweise durch Schleifen herzustellen damit die Schneiden 15 zu realisieren. Auch kann die übrige Außenfläche 7 des Grundkörpers 3 auf diese Weise leicht bearbeitet werden.

Aus den Erläuterungen wird ohne weiteres deutlich, dass der Grundkörper 3 des Werkzeugs 1 nahe der Stirnseite 11 auch einen Abschnitt aufweisen kann, der nicht kuppelförmig ausgebildet ist, sondern zylindrisch, um einen Bohrer, eine Reibahle oder einen Fräser zu realisieren. Auch kann der Abschnitt konisch ausgebildet sein und sich nach vorne verjüngen.

Auch in diesen Fällen ist es sehr vorteilhaft, wenn, wie bei dem in Figur 1 dargestellten Ausführungsbeispiel des Werkzeugs 1 erläutert, in einem Frontbereich 35 ohne Hartstoffschicht 9 eine Zentrierausnehmung im Bereich der Mittelachse 5 vorgesehen ist, der eine weitere in der Endfläche 27 vorgesehene Zentrierausnehmung im Bereich der Mittelachse 5 gegenüberliegt. Auf diese Weise können auch derartige Werkzeuge zwischen Zentrierspitzen eingespannt und bearbeitet werden.

In allen Fällen ist es besonders vorteilhaft, wenn die hier erwähnten Ausnehmungen gerade im Bereich der Vorderseite des Werkzeugs 1 in einem Bereich eingebracht werden können, der keine Hartstoffschicht 9 aufweist. Es ist sehr viel leichter, das Basismaterial die Grundkörpers 3, der zumindest in seinem vorderen Bereich 13 aus Hartmetall besteht, zu bearbeiten, als dies bei einem Werkzeug mit einer frontseitig durchgehenden Hartstoffschicht der Fall ist.

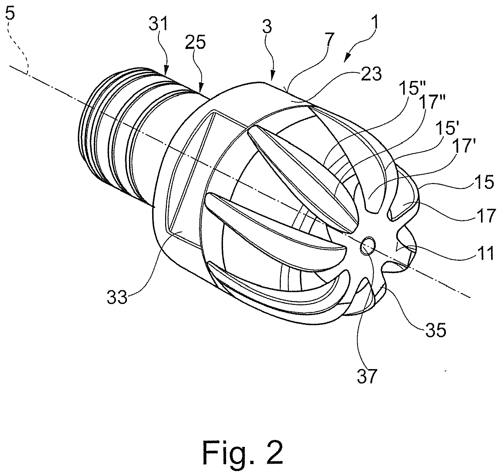

Figur 2 zeigt das in Figur 1 wiedergegebene Werkzeug 1 in perspektivischer Vorderansicht. Gleiche und funktionsgleiche Elemente sind mit gleichen Bezugszeichen versehen, sodass insofern auf die vorangegangene Beschreibung verwiesen wird.

Das Werkzeug 1 ist gegenüber der Darstellung in Figur 1 leicht gedreht, sodass hier die Planfläche 33 gut erkennbar ist. Es kann vorzugsweise außerdem eine weitere diametral gegenüberliegende Planfläche vorgesehen werden.

Das Werkzeug 1 hat mindestens eine, hier acht gleichmäßig über die Umfangsfläche verteilte Schneiden 15, 15', 15' usw. auf, denen Spanräume 17, 17', 17" usw. zugeordnet sind, über welche die von den Schneiden 15 abgetragenen Späne abtransportiert werden.

Durch die perspektivische Vorderansicht ist die in dem Frontbereich 35 im Bereich der Mittelachse 5 angeordnete Zentrierausnehmung 37 gut zu erkennen. Eine entsprechende Zentrierausnehmung ist, wie gesagt, in der gegenüberliegenden Endfläche 27 im Bereich der Mittelachse 5 vorgesehen. Werden in die Ausnehmungen Zentrierspitzen eingebracht, so wird das Werkzeug 1 exakt zentriert und ist für eine Bearbeitung leicht zugänglich. Es können im eingespannten Zustand die Spanräume 17, die Ausnehmung für die Planfläche 33 eingebracht werden. Auch kann das Außengewinde 31 in den Schaft 25 eingebracht werden, sei es durch Schleifen, durch Laserbehandlung oder durch ein Erosionsverfahren, wie dies auch bei der Herstellung der Spanräume 17 oder der Planfläche 33 der Fall sein kann.

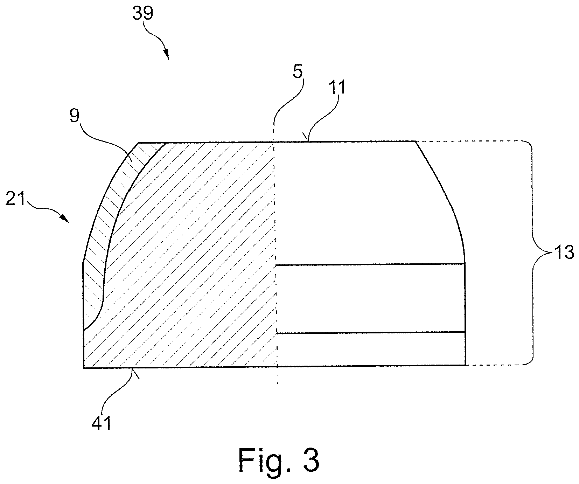

Figur 3 zeigt einen Rohling 39 eines kuppelförmigen Abschnitts 21, wobei rechts von der Mittellinie 5 der Rohling 39 in Seitenansicht und links davon im Längsschnitt dargestellt ist. Gleiche und funktionsgleiche Elemente sind mit gleichen Bezugszeichen versehen, sodass insofern auf die vorangegangene Beschreibung verwiesen wird.

Der Rohling 39 ist auf das in den Figuren 1 und 2 dargestellte Ausführungsbeispiel des Werkzeugs 1 abgestimmt. Er ist daher kuppelförmig ausgebildet. Es ist sehr wohl möglich, auch einen Rohling vorzusehen, der zylindrisch oder konisch ausgebildet ist.

Der Bereich 13 ist mit einer Hartstoffschicht 9 versehen, die vorzugsweise auf das Grundmaterial des Rohlings 39 aufgepresst ist. Die Stirnseite 11 ist hier plan ausgebildet. Es ist möglich, einen Rohling 39 mit der hier dargestellten Kontur herzustellen und in dem Bereich 13 die Hartstoffschicht 9 zumindest bereichsweise, aber auch flächendeckend aufzubringen, ohne dass diese sich bis in die Stirnseite 11 erstreckt. Diese Ausführungsform ist besonders bevorzugt, weil es dann sehr leicht möglich ist, die in der Stirnseite 11 realisierte Ausnehmung 37, wie sie in Figur 2 gezeigt ist, einzubringen.

Denkbar ist es aber auch, den oberhalb des Bereichs 13 liegenden Abschnitt des Grundkörpers 39 kuppelförmig auszubilden und ebenfalls mit einer Hartstoffschicht 9 zu versehen. Ein derartig ausgestalteter Rohling kann dann in einem ersten Schritt in dem in Figur 3 oben liegenden Bereich abgeschliffen werden, um die Stirnseite 11 zu realisieren und einen um die Mittelachse 5 herumlaufenden Frontbereich 35 der oben angesprochenen Art

Der in Figur 3 dargestellte Rohling 39 weist eine Unterseite 41 auf, die an dem Grundkörper 3 eines Werkzeugs 1 auf geeignete Weise angebracht wird, beispielsweise durch Löten, Schweißen oder Verkleben. Es ergibt sich damit die in den Figuren 1 und 2 dargestellte Grenzlinie 23. Nach dem Aufbringen des Rohlings 39 auf den übrigen Grundkörper 3 entsteht ein Grundkörper 3, wie er in den Figuren 1 und 2 wiedergegeben ist.

Der in den Figuren 1 und 2 wiedergegebene, links von der Grenzlinie 23 liegende Bereich des Grundkörpers 3 kann auch als Basiselement des Grundkörpers bezeichnet werden, welches dann mit dem kuppelförmigen Abschnitt 21 den Grundkörper des Werkzeugs 1 bildet.

Es ist überdies möglich, dass der Grundkörper 3 in seinem in den Figuren 1 und 2 rechts liegenden vorderen Bereich kuppelförmig ausgebildet ist und damit einen kuppelförmigen Abschnitt realisiert, sodass ein durchgehender Grundkörper 3 realisiert wird. Für die Aufbringung der Hartstoffschicht 9 ist es jedoch vorteilhaft, wenn lediglich ein Grundkörper 39 mit der Kontur des kuppelförmigen Abschnitts 21 geschaffen wird, der dann auf den Rest des Grundkörpers 3, also auf dessen Basiselement, aufgebracht wird.

Wie Figur 3 zeigt, ist die Hartstoffschicht 9 bei dem Rohling 39 in dem Bereich 13 noch durchgehend unversehrt. Es wurde hier also noch nicht mindestens ein Spanraum 17 eingebracht, um die mindestens eine geometrisch definierte Schneide 15 zu realisieren. Dieser Schritt erfolgt vorzugsweise erst dann, wenn der Rohling 39 an dem Basiselement des Grundkörpers 3 befestigt ist.

Das Verfahren zur Herstellung eines Werkzeugs 1 der oben beschriebenen Art wird im Folgenden beschrieben: Eine Hartstoffschicht 9 wird zumindest auf Bereiche einer Außenfläche 7 eines eine Mittelachse aufweisenden Grundkörpers 3 des herzustellenden Werkzeugs 1 aufgebracht, und zwar derart, dass ein zentraler Frontbereich 35 des Werkzeugs 1, der um die Mittelachse 5 gelegen ist, frei von der Hartstoffschicht 9 ist. In einem mit der Hartstoffschicht 9 versehenen Bereich der Außenfläche 7 des Grundkörpers 3 wird eine geometrisch definierte Schneide 15 durch Abtrag von Material der Hartstoffschicht 9 realisiert. Das Material kann durch Schleifen, mittels eines Lasers oder eines Erosionsverfahrens abgetragen werden. Auf die Art der Abtragung des Materials kommt es nicht unmittelbar an. Entscheidend ist, dass zwischen der unversehrten Außenfläche der Hartstoffschicht 9 und der durch Materialabtrag entstehenden Fläche eine geometrisch definierte Schneide 15 gebildet wird.

Vorzugsweise wird bei der Herstellung der Schneide 15 nicht nur Material von der Hartstoffschicht 9, sondern auch von dem Grundkörper 3 abgetragen, sodass im Anschluss einer Schneide 15 ein Bereich gebildet wird, der im Bereich der Hartstoffschicht 9 liegt und ein weiterer Bereich, der von dem Material des Grundkörpers 3 gebildet wird. Die sich durch Materialabtrag ergebende und an die Schneide 15 anschließende Fläche bildet die Spanfläche, auf welcher von der Schneide 15 abgetragene Späne ablaufen. Der besonders belastete Bereich der Spanfläche, der sich unmittelbar an die Schneide anschließt, wird demnach von dem Material der Hartstoffschicht 9 gebildet und ist damit besonders widerstandsfähig.

Bei der Herstellung des Werkzeugs 1 wird vorzugsweise ein Grundkörper 3 mit einem kuppelförmigen Abschnitt 21 realisiert, dessen Außenfläche 7 mit der Hartstoffschicht 9 versehen ist. Dieser Abschnitt 21 wird mit einem Basiselement verbunden, um, wie gesagt, das Werkzeug zu realisieren.

Es ist also möglich, das Werkzeug aus zwei Teilen herzustellen, wobei vorzugsweise lediglich der kuppelförmige Abschnitt 21 zumindest bereichsweise mit der Hartstoffschicht 9 derart versehen ist, dass der zentrale Frontbereich 35 um die Mittelachse 5 des Grundkörpers 3 frei von der Hartstoffschicht 9 ist.

Bei der Herstellung des Werkzeugs 1 kann ein Fräser, ein Kugelbahnfräser, eine Reibahle, ein Bohrer oder dergleichen realisiert werden. Vorzugsweise wird ein Kugelbahnfräser mit sechs gleichmäßig in Umfangsrichtung verteilten geometrisch definierten Schneiden 15, 15', 15" usw. realisiert.

Bei dem Herstellungsverfahren wird auch eine Zentrierausnehmung 37 an dem Frontbereich 35 realisiert, außerdem eine Zentrierausnehmung an der der Frontseite gegenüberliegenden Rückseite des Werkzeugs 1. Auf diese Weise ist es möglich, das Werkzeug leicht einzuspannen und dessen Außenfläche zu bearbeiten, insbesondere die mindestens eine geometrisch definierte Schneide 15 durch Materialabtrag zu realisieren.

Bei der Herstellung des Werkzeugs 1 mit dem Frontbereich ohne Hartstoffschicht ist es auch möglich, zunächst einen kuppelförmigen Abschnitt 21 gänzlich mit einer Hartstoffschicht 9 zu versehen und dann den vordersten Teil des Abschnitts abzuschleifen. Auf jeden Fall wird zunächst ein Grundkörper 3 eines Werkzeugs 1 geschaffen, der in Figur 3 dargestellt ist und sich dadurch auszeichnet, dass er eine umlaufende Außenfläche 7 aufweist, die mit der Hartstoffschicht 9 versehen ist. Diese umläuft den Abschnitt 21 quasi wie ein Band, in welchem dann die mindestens eine geometrisch definierte Schneide 15 durch Materialabtrag realisiert wird, der bis in den Grundkörper 3 des Werkzeugs 1 reichen kann.

Vorzugsweise ist vorgesehen, dass bei der Herstellung der mindestens einen geometrisch definierten Schneide der Materialabtrag sowohl im Bereich der Hartstoffschicht 9 als auch noch in einem Bereich des Grundkörpers 3 erfolgt, sodass zum einen mindestens eine Schneide 15, 15', 15" usw. geschaffen wird, an die sich eine Spanfläche anschließt, die im Bereich der Hartstoffschicht 9 realisiert ist, außerdem eine Spanfläche, die durch das Material des Grundkörpers 3 des Werkzeugs 1 gebildet wird. Durch den Materialabtrag werden also den Schneiden 15, 15', 15" usw. zugeordnete Spanräume 17, 17', 17" usw. zugeordnet, über welche die von den Schneiden 15 abgetragenen Späne abtransportiert werden können. Dabei wird die eine Spanfläche bildende seitliche Begrenzungsfläche 19 eines Spanraums 17 vorzugsweise, wie gesagt, sowohl von der Hartstoffschicht 9 als auch von dem Material des Grundkörpers 3 gebildet.

## Patentansprüche

1. Werkzeug zur spanenden Bearbeitung von Werkstücken, mit
- einem eine Mittelachse (5) aufweisenden Grundkörper (3), der
- eine Außenfläche (7) mit
- einer zumindest auf Bereichen der Außenfläche (7) aufgebrachten Hartstoffschicht (9) aufweist,
- in die mindestens eine geometrisch definierte Schneide (15) eingearbeitet ist, wobei
- ein zentraler Frontbereich (35) um die Mittelachse (5) des Grundkörpers (3) frei von der Hartstoffschicht (9) ist,
**dadurch gekennzeichnet, dass**
- die mindestens eine geometrisch definierte Schneide (15) durch Herstellen eines Spanraums (17) unter Abtrag von Material der Hartstoffschicht (9) hergestellt ist.

2. Werkzeug nach Anspruch 1, **dadurch gekennzeichnet, dass** der Grundkörper (3) einen kuppelförmigen Abschnitt (21) aufweist, der mit der Hartstoffschicht (9) versehen ist, und der mit einem Basiselement des Grundkörpers (3) verbindbar ist.

3. Werkzeug nach Anspruch 2, **dadurch gekennzeichnet, dass** der kuppelförmige Abschnitt (21) Hartmetall aufweist oder daraus besteht.

4. Werkzeug nach einem der vorhergehenden Ansprüche, **dadurch gekennzeichnet, dass** der Grundkörper (3) einen Schaft (25) aufweist.

5. Werkzeug nach Anspruch 4, **dadurch gekennzeichnet, dass** der Schaft (25) ein Außengewinde (31) aufweist.

6. Werkzeug nach einem der vorhergehenden Ansprüche, **dadurch gekennzeichnet, dass** es als Fräser, Kugelbahnfräser, Reibahle oder Bohrer ausgelegt ist.

7. Werkzeug nach Anspruch 6, **dadurch gekennzeichnet, dass** es als Kugelbahnfräser mit sechs gleichmäßig in Umfangsrichtung verteilten geometrisch definierten Schneiden (15,15',15" usw.) ausgelegt ist.

8. Werkzeug nach einem der vorhergehenden Ansprüche, **gekennzeichnet durch** eine Zentrierausnehmung (37) an dem Frontbereich (35) sowie durch eine Zentrierausnehmung an der der Frontseite gegenüberliegenden Rückseite des Werkzeugs (1).

9. Verfahren zur Herstellung eines Werkzeugs nach einem der Ansprüche 1 bis 8 mit folgenden Schritten:
- Aufbringen einer Hartstoffschicht (9) zumindest auf Bereiche einer Außenfläche (7) eines eine Mittelachse (5) aufweisenden Grundkörpers (3) des Werkzeugs (1) derart, dass
- ein zentraler Frontbereich (35) um die Mittelachse (5) des Grundkörpers (3) frei von der Hartstoffschicht (9) ist, und
- Herstellung mindestens einer geometrischen definierten Schneide (15) in einem mit der Hartstoffschicht (9) versehenen Bereich der Außenfläche (7) durch Herstellen eines Spanraums (17) unter Abtrag von Material der Hartstoffschicht (9).

10. Verfahren nach Anspruch 9, **dadurch gekennzeichnet, dass** bei der Herstellung der Schneide (15) auch Material des Grundkörpers (3) des Werkzeugs (1) abgetragen wird.

11. Verfahren nach Anspruch 9 oder 10, **dadurch gekennzeichnet, dass** das Werkzeug (1) aus einem Grundkörper (3) mit einem kuppelförmigen Abschnitt (21), dessen Außenfläche (7) mit der Hartstoffschicht (9) versehen ist, und aus einem mit dem Abschnitt (21) verbindbaren Basiselement herstellbar ist.

12. Verfahren nach einem der Ansprüche 9 bis 11, **dadurch gekennzeichnet, dass** das Werkzeug (1) als Fräser, Kugelbahnfräser, Reibahle oder Bohrer auslegbar ist.

13. Verfahren nach Anspruch 12, **dadurch gekennzeichnet, dass** das Werkzeug (1) als Kugelbahnfräser mit sechs gleichmäßig in Umfangsrichtung verteilten geometrisch definierten Schneiden (15,15',15" usw.) ausgelegt ist.

14. Verfahren nach einem der Ansprüche 9 bis 13, **dadurch gekennzeichnet, dass** eine Zentralausnehmung (37) an dem Frontbereich (35) sowie eine Zentrierausnehmung an der der Frontseite gegenüberliegenden Rückseite des Werkzeugs (1) hergestellt wird.

## Claims

1. A tool for the machining of work pieces, with
- a base body (3) having a central axis (5), the base body comprising
- an outer surface (7) having
- a hard material layer (9) applied at least on certain regions of the outer surface (7),
- into which at least one geometrically defined cutting edge (15) is incorporated, wherein
- a central front region (35) around the central axis (5) of the base body (3) is free of the hard material layer (9),
**characterized in that**
- the at least one geometrically defined cutting edge (15) is manufactured by making a chip volume (17) by removing material from the hard material layer (9).

2. The tool according to claim 1, **characterised in that** the base body (3) has a dome-shaped portion (21) that is provided with the hard material layer (9) and can be connected to a base element of the base body (3).

3. The tool according to claim 2, **characterised in that** the dome-shaped portion (21) comprises or consists of hard metal.

4. The tool according to any one of the preceding claims, **characterised in that** the base body (3) has a stem (25).

5. The tool according to claim 4, **characterised in that** the stem (25) comprises an external thread (31).

6. The tool according to any one of the preceding claims, **characterised in that** it is configured as a milling tool, a ball race milling tool, a reaming tool or a drilling tool.

7. The tool according to claim 6, **characterised in that** it is configured as a ball race milling tool with six geometrically defined cutting edges (15, 15', 15" etc.) evenly spaced in the circumferential direction.

8. The tool according to any one of the preceding claims, **characterized by** a centring recess (37) at the front region (35) as well as a centring recess at the backside of the tool (1) opposite the front side.

9. A method for manufacturing a tool according to any one of claims 1 to 8, with the following steps:
- applying a hard material layer (9) on at least certain regions of an outer surface (7) of a base body (3) of a tool (1), the base body (3) having a central axis (5), in such a way that
- a central front region (35) around the central axis (5) of the base body (3) is free of the hard material layer (9), and
- fabricating at least one geometrically defined cutting edge (15) in a region of the outer surface (7) provided with the hard material layer (9), by fabricating a chip space (17) by removing material from the hard material layer (9).

10. The method according to claim 9, **characterised in that** during manufacturing of the cutting edge (15) material is also removed from the base body (3) of the tool (1).

11. The method according to claim 9 or 10, **characterised in that** the tool (1) can be manufactured from a base body (3) with a dome-shaped portion (21) the outer surface (7) of which is provided with the hard material layer (9), and from a base element that can be connected to the portion (21).

12. The method according to any one of claims 9 to 11, **characterised in that** the tool (1) is configurable as a milling tool, a ball race milling tool, a reaming tool or a drilling tool.

13. The method according to claim 12, **characterised in that** the tool (1) is configured as a ball race milling tool with six geometrically defined cutting edges (15, 15', 15" etc.) evenly spaced in the circumferential direction.

14. The method according to any one of claims 9 to 13, **characterised in that** a centring recess (37) at the front region (35) and a centring recess at the backside of the tool (1) opposite the front side are manufactured.

## Revendications

1. Outil pour le traitement des pièces par enlèvement de copeaux, avec
- un corps de base (3) ayant un axe central (5), ayant
- une surface extérieure (7) avec
- une couche (9) d'un matériau dur appliquée sur au moins certaines portions de la surface extérieure (7),
- dans laquelle est incorporé au moins un tranchant (15) défini géométriquement,
- une région centrale frontale (35) autour de l'axe central (5) du corps de base (3) étant libre de la couche (9) de matériau dur,
**caractérisé en ce que**
- l'au moins un tranchant (15) défini géométriquement est fabriqué par formation d'un logement de copeaux (17) par enlèvement de matériau de la couche (9) de matériau dur.

2. Outil selon la revendication 1, **caractérisé en ce que** le corps de base (3) présent une partie (21) en forme de dôme qui est munie de la couche (9) de matériau dur, et qui peut être reliée avec un élément de base du corps de base (3).

3. Outil selon la revendication 2, **caractérisé en ce que** la partie (21) en forme de dôme comporte ou consiste en un métal dur.

4. Outil selon l'une quelconque des revendications précédentes, **caractérisé en ce que** le corps de base (3) présente une tige (25).

5. Outil selon la revendication 4, **caractérisé en ce que** la tige (25) présente un filetage extérieur (31).

6. Outil selon l'une quelconque des revendications précédentes, **caractérisé en ce qu'**il est configuré en tant qu'outil de fraisage, outil de fraisage de chemins de roulement, alésoir ou foret.

7. Outil selon la revendication 6, **caractérisé en ce qu'**il est configuré en tant qu'outil de fraisage de chemins de roulement avec six tranchants (15, 15', 15" etc.) définis géométriquement et distribués uniformément dans le sens circonférentiel.

8. Outil selon l'une quelconque des revendications précédentes, **caractérisé par** un creux de centrage (37) sur la région frontale (35) et par un creux de centrage sur le côté arrière de l'outil (1) opposé au côté frontal.

9. Procédé pour fabriquer un outil selon l'une quelconque des revendications 1 à 8, avec les étapes suivantes consistant à :
- appliquer une couche (9) d'un matériau dur sur au moins certaines portions d'une surface extérieure (7) d'un corps de base (3) de l'outil (1) ayant un axe central (5), de telle manière que
- une région centrale frontale (35) autour de l'axe central (5) du corps de base (3) est libre de la couche (9) de matériau dur, et
- fabriquer au moins un tranchant (15) défini géométriquement dans une région de la surface extérieure (7) munie de la couche (9) de matériau dur, en fabriquant un logement de copeaux (17) par enlèvement de matériau de la couche (9) de matériau dur.

10. Procédé selon la revendication 9, **caractérisé en ce qu'**on enlève, pendant la fabrication du tranchant (15), aussi du matériau du corps de base (3) de l'outil (1).

11. Procédé selon la revendication 9 ou 10, **caractérisé en ce que** l'outil (1) peut être fabriqué à partir d'un corps de base (3) avec une partie (21) en forme de dôme dont la surface extérieure (7) est munie de la couche (9) de matériau dur, et à partir d'un élément de base qui peut être relié à la partie (21).

12. Procédé selon l'une quelconque des revendications 9 à 11, **caractérisé en ce que** l'outil (1) peut être configuré en tant qu'outil de fraisage, outil de fraisage de chemins de roulement, alésoir ou foret.

13. Procédé selon la revendication 12, **caractérisé en ce que** l'outil (1) est configuré en tant qu'outil de fraisage de chemins de roulement avec six tranchants (15, 15', 15" etc.) définis géométriquement et distribués uniformément dans le sens circonférentiel.

14. Procédé selon l'une quelconque des revendications 9 à 13, **caractérisé en ce qu'**un creux de centrage (37) sur la région frontale (35) aussi qu'un creux de centrage sur le côté arrière de l'outil (1) opposé au côté frontal sont fabriqués.
